# EUROPEAN PATENT SPECIFICATION

(11) **EP 2 061 985 B1**
(45) Date of publication and mention of the grant of the patent: **21.12.2011**
(21) Application number: 07823946.4
(22) Date of filing: 28.09.2007
(51) Int. Cl.: F16L 33/207, F16L 33/22

(54) **HOSE FITTING**
SCHLAUCHVERBINDER
RACCORD DE TUYAU SOUPLE

(30) Priority: 07.10.2006 GB 0619884
(43) Date of publication of application: 27.05.2009
(73) Proprietor: AFLEX HOSE LIMITED, Sowerby Bridge, Halifax HX6 3BW (GB)
(72) Inventor: SETON-ANDERSON, Roderick, Bradford, BD12 0EJ (GB)
(74) Representative: Neilson, Martin Mark
(86) International application number: PCT/GB2007/003685
(87) International publication number: WO 2008/040941

(56) References cited:
- EP-A- 0 712 474
- DE-U1-202006 001 908
- US-A- 3 325 194
- US-A- 4 392 678
- US-A1- 2005 082 826

## Description

The present invention relates to a hose fitting and in particular, although not exclusively, to a reusable hose fitting.

Rubber and plastic hoses find extensive use in a variety of specific industrial and domestic applications. In the majority of these applications a connection body is secured to at least one end of the hose so as to provide a means of connection to other hoses or devices.

Generally, it is a requirement that these connection bodies, alternatively termed end fittings, are attached to the hose in such a way that fluid passing through the hose, typically under pressure or a partial vacuum, does not leak at the interface between the hose and end fitting. In extreme implementations, the end fitting may be required to maintain integrity up to the burst pressure of the hose and to withstand the effects of vibration and accidental damage during use.

US 5,678,867 discloses a hose fitting assembly for attaching an end portion of a hose to an end fitting in which the hose is sandwiched between an inner sleeve extending from the end fitting and an outer collar which is locked in position by clamping members. Compression means operate to radially compress the hose between the outer collar and the inner sleeve. Separate lock means are provided to prevent longitudinal separation of the end fitting from the hose as the fluid pressure changes.

EP 0811801 discloses an end fitting in which the fluid tight seal is provided by a plastic pressure ring sandwiched between a pipe support sleeve and a clamping nut. The clamping nut is provided with a conical internal surface which cooperates with a corresponding conical surface of the pipe support sleeve to clamp the pressure ring and compress the pipe. Annularly spaced apart open end cuts are formed in the pressure ring to allow circumferential and radial deformation of the pressure ring in response to clamping of the locking nut to enable the fitting to be used for connecting pipes of different diameters.

US 2003/0001385 discloses a reusable hose coupling having an outer locking nut that is secured over an intermediate ferrule adapted for positioning against the outer surface of the hose end. A tail portion of the connection body positioned against the inner surface of the hose provides the cooperating and opposing face of the sandwich. The fitting is secured to the hose by the locking nut which acts to compress the ferrule against the hose end.

US 5,558,375 describes a reusable hose fitting having screw threads provided on its exterior surface for cooperating with the screw threads provided on an exterior surface of a locking nut. The hose end is sandwiched between an intermediate annular ferrule and a tail portion of the hose fitting positioned within the hose. The locking nut and intermediate ferrule comprise cooperating tapered regions such that as the locking nut is screwed over the end fitting, the tapered faces are brought into contact so as to provide compression of the ferrule and the corresponding region of the hose end.

US 2002/0000721 teaches of a sleeve-type pipe joint having an outer collar that is secured over an inner sleeve which in turn is sandwiched between the outer collar and an outer surface of the hose end. A tail portion of the hose end fitting is inserted within the hose and sits against its inner surface whereby the hose end is sandwiched between the inner sleeve and the tail portion of the hose fitting. The fluid seal is provided by cooperating tapered regions of the outer collar and inner sleeve which when brought into contact serve to compress the hose end. According to different embodiments, either the outer collar or inner sleeve are locked in position at the end fitting by suitable locking means in the form of a projection configured to sit within a corresponding groove.

US 3,325,194 discloses a hydraulic hose coupling assembly configured to maintain coupling at high pressures whilst providing a coupling joint of relatively small dimensions. The coupling assembly comprises a compressible inner sleeve having a plurality of slots formed in the sleeve body that allow for radial compression. Radial compression is provided using an outer swaging collar that is forced over the inner sleeve causing it to compress radially against the hose sandwiched between the inner sleeve and spigot body.

There are a number of disadvantages associated with conventional reusable end fittings. Hose end connections where an outer collar provides a compression force to an inner sleeve must be secured in position at the fitting to maintain contact between the fitting and hose. This is achieved conventionally by locking means in the form of cooperating screw threads, tong and groove arrangements and other types of clamping means serving to secure the outer collar to the end fitting alternatively termed a spigot. This type of locking means is essential where cooperating tapered faces or regions are provided between the outer collar and inner sleeve so as to achieve the required compression of the hose. Without the mechanical locking means the opposed tapered regions would be forced apart destroying the fluid tight seal between the hose and end fitting.

The implementation of mechanical locking means necessitates additional machining and processing of both the end fitting and the outer collar which is costly both in terms of processing time and materials. Utilisation of tapered surfaces also restricts the length of the inner sleeve as the thickness of the sleeve is reduced along its length due to the incorporation of the taper. What is required therefore is an end fitting that addresses the above identified problems.

The present invention provides a convenient and efficient means for releasably securing an end fitting to a hose enabling the hose to be connected to other hoses and devices etc. The hose is secured to the end fitting using an outer collar and an inner compressible sleeve which may be compressed against the outer surface of the hose by the outer collar. Advantageously, the present invention does not necessitate additional locking means so as to adequately secure the end fitting to the hose. In contrast, the locking action is provided by the frictional contact between the inner surface of the outer collar and the outer surface of the inner sleeve.

The present invention is advantageous over conventional concentric locking collars that comprise tapering in the region of compression for two reasons. Firstly, by utilising an outer collar and inner sleeve being devoid of a taper in the region of compression, the frictional locking force between the two mating surfaces obviates the need for an additional mechanical locking means which is otherwise required with conventional tapered collars and sleeves. The inner surface of the outer collar and inner and outer surfaces of the inner sleeve of the present invention are aligned substantially parallel to the longitudinal axis of the outer collar, inner sleeve and connection body such that the locking force between the inner sleeve and outer collar in the axial direction is substantially uniform. Secondly, the length of the outer collar and the inner sleeve is not limited as with conventional tapered systems in which the length of the collar and sleeve is limited by their relative increasing and decreasing wall thicknesses. The present invention in turn provides increased design flexibility and the possibility of increasing the strength of seal by increasing the length of collar and sleeve as required.

Through the cooperation between the outer collar and inner sleeve, the present invention is configurable to maintain a fluid tight seal between the end fitting and the hose up to the burst pressure of the hose. Additionally, the present invention is designed to allow easy and convenient release of the locking action provided by the outer collar and inner sleeve to enable extraction of the connection body from the hose for reuse. The outer collar is also designed to be reusable.

According to a first aspect of the present invention there is provided a hose fitting comprising: an inner sleeve having an inner and outer surface, said inner surface configured for positioning over an outer surface of a compressible hose capable of receiving a connection body internally within said hose, said inner sleeve capable of radial compression over a region of its length; said inner sleeve comprising at least one slot extending longitudinally over a region of said inner sleeve configured for compression, said slot being open at one end of said inner sleeve; and an outer collar having an inner surface configured for positioning over said outer surface of said inner sleeve wherein prior to contact with said inner sleeve a radius of a region of said inner surface of said outer collar is less than a radius of a region of said outer surface of said inner sleeve, wherein said outer collar is configured to radially compress at least a region of said inner sleeve and said hose against said connection body such that in the region of compression said inner surface of said outer collar and said inner and outer surfaces of said inner sleeve are aligned substantially parallel with the longitudinal axis of said inner sleeve and said outer collar; wherein said outer collar may be held in position over said inner sleeve exclusively by the longitudinally extending frictional contact between said inner surface of said outer collar and said outer surface of said inner sleeve in response to the radial expansion force of said compressed hose and said inner sleeve positioned between said outer collar and said connection body; said hose fitting characterised by: a groove provided at said inner surface of a said inner sleeve configured to mate with a shoulder extending from said connection body, the cooperative engagement of said groove and said shoulder configured to inhibit axial displacement of said inner sleeve relative to said connection body; said outer collar configured to maintain said cooperative engagement between said groove and said shoulder by positioning over said inner sleeve.

The present fitting is particularly suitable to releasably attach a connection body having a tubular tail portion to a tubular hose. The tubular tail portion, having an outer surface which is aligned substantially axially parallel to the longitudinal axis of the connection body, provides a rigid structure against which the inner sleeve and hose end may be compressed. The tubular portion of the connection body may comprise a profiled or non-profiled outer surface according to known connection bodies found in the art.

Preferably, the inner sleeve comprises a tapered leading edge extending between its inner and outer surface. Similarly, the outer collar may also comprise a tapered leading edge configured to mate with the tapered leading edge of the inner sleeve as the outer collar is slid over the inner sleeve. These leading edges only serve the purpose of initially guiding the inner sleeve into a correct internal engagement with the outer collar, they do not perform any other compressive function following correct concentric engagement.

Further, the inner surface of the inner sleeve comprises an annular groove configured to mate with an annular shoulder extending from the connection body, the cooperation between the groove and shoulder being configured to inhibit longitudinal displacement of the inner sleeve relative to the connection body.

The outer collar may comprise at least one or a plurality of recessed grooves or indented portions provided on its internal surface. Preferably, two annular grooves are formed at the internal surface of the outer collar, each groove being axially spaced from one another. The indented regions serve to reduce friction between the outer collar and the inner sleeve as the mating surfaces are brought together.

According to the specific implementation, the inner sleeve comprises a shoulder extending from its inner surface configured to mate with a shoulder extending from the cooperation between the groove and shoulder being configured to inhibit longitudinal displacement of the inner sleeve relative to the connection body.

The outer collar may comprise at least one or a plurality of recessed grooves or indented portions provided on its internal surface. Preferably, two annular grooves are formed at the internal surface of the outer collar, each groove being axially spaced from one another. The indented regions serve to reduce friction between the outer collar and the inner sleeve as the mating surfaces are brought together.

According to a specific implementation, the inner sleeve also comprises a shoulder extending from its inner surface configured to mate with the shoulder extending from the connection body. The shoulders are mated to abut one another as the inner sleeve is compressed radially through frictional contact with the outer collar. The interlocking shoulders of the connection body and inner sleeve serve to further inhibit longitudinal displacement of the inner sleeve relative to the connection body.

The inner sleeve and outer collar comprise a substantially cylindrical geometry enabling them to be positioned over and about an elongate cylindrical hose.

The inner sleeve comprises substantially axially parallel inner and outer surfaces extending over a region of its length. Preferably, the outer collar comprises substantially axially parallel inner and outer surfaces extending over a region of its length.

Importantly, and to ensure a satisfactory locking force is achieved between the inner sleeve and outer collar, in the region of compression, the inner surface of the outer collar and the inner and outer surfaces of the inner sleeve are aligned substantially parallel with the longitudinal axis of the inner sleeve, outer collar and tubular portion of the connection body inserted within the tubular hose. That is, in the region of compression, physical contact between the outer collar, inner sleeve, hose end and the tubular tail region of the connection body is made via surfaces aligned substantially parallel with the longitudinal axis of the collar, sleeve, connection body and hose. Particularly, the longitudinal wall thicknesses of the inner sleeve over the region of compression is substantially uniform.

Preferably, the outer collar comprises an annular groove recessed into its outer surface. This groove enables the outer collar to be held in position between opposing jaws of a device so that the outer collar may be axially restrained during assembly of the fitting at the hose end. Alternatively, the outer collar comprises diametrically opposed substantially flat regions recessed into its outer surface.

The inner sleeve is configured for deformation and may comprises a deformable material including in particular a metal, a steel, stainless steel, a plastic, or rubber. Further, the outer collar may be metal and preferably steel or stainless steel. The inner sleeve is configured for elastic deformation such that when compressed by the outer collar the inner sleeve provides a return expansion force which in addition to the expansion force provided by the compressed hose, serves to lock the outer collar in position at the hose end. The inner sleeve is configured to transfer the return expansion force of the compressed hose to the inner surface of the outer collar.

Preferably, the inner sleeve comprises at least one slot and in particular a plurality of slots extending longitudinally over a region of its length to be compressed. The at least one slot is preferably open at one end of the inner sleeve so as to allow radial compression of the sleeve as the slot widths are reduced. In particular, the plurality of slots may be substantially parallel aligned.

Optionally, to decrease the frictional contact between the outer collar and the inner sleeve so as to ease the assembly operation but not compromise integrity of the resulting joint, the inner surface of the outer collar may have internal radial grooves cut into it thereby reducing the surface area in contact with the inner sleeve.

Optionally, to increase the frictional contact between the outer collar and the inner sleeve, the inner surface of the outer collar and outer surface of the inner sleeve may be roughened by machining. The surface roughening may comprise machined, radial or spiral grooves cut into the respective outer and inner surfaces. Surface roughening may also be provided at the inner surface of the inner sleeve configured for positioning in contact with the outer surface of the hose. Optionally, barbs may be provided on the inner surface of the inner sleeve configured to bite into the outer region of the hose to inhibit axial displacement.

According to a second aspect of the present invention there is provided: a method of releasibly securing a connection body to a hose, said method comprising: inserting a connection body within an end region of a compressible hose; positioning an inner sleeve over said hose at the region of said connection body, said inner sleeve comprising at least one slot open at one end; sliding an outer collar over an outer surface of said inner sleeve wherein prior to contact with said inner sleeve a radius of a region of an inner surface of said outer collar is less than a radius of a region of said outer surface of said inner sleeve; and radially compressing said inner sleeve and said hose on to said connection body as said outer collar is slid over said inner sleeve, a width of said at least one slot configured to decrease as said inner sleeve is radially compressed, wherein said outer collar is held in position over said inner sleeve exclusively by the longitudinally extending frictional contact between said inner surface of said outer collar and said outer surface of said inner sleeve in response to the radial expansion of the compressed hose and said inner sleeve positioned between said outer collar and said connection body such that in the region of compression said inner surface of said outer collar and said inner and outer surfaces of said inner sleeve are aligned substantially parallel with the longitudinal axis of said inner sleeve and said outer collar; said method characterised by: inhibiting axial displacement of said inner sleeve relative to said connection body by mating a shoulder projecting from said connection body into a groove provided on an inner surface of said inner sleeve; and maintaining said cooperative engagement between by said groove and said shoulder via said outer collar.

Specific implementations of the invention will now be described by way of example only with reference to the accompanying drawings in which:
Figure 1 is a cross sectional side elevation view of an outer collar;
Figure 2 is a cross sectional side elevation view of an inner sleeve;
Figure 3 is a cross sectional side elevation view of a connection body;
Figure 4a is a cross sectional side elevation view of the outer collar, inner sleeve and connection body of Figures 1 to 3 partially secured in position about an end region of a hose during assembly;
Figure 4b is a cross sectional side elevation view of the outer collar, inner sleeve and connection body of Figures 1 to 3 fully secured in position about an end region of a hose following assembly;
Figure 4c is a cross sectional side elevation view of the outer collar, inner sleeve and connection body includes a further specific implementation;
Figure 5 is a perspective view of a device usable to assemble and disconnect the connection body to a hose using the outer collar and inner sleeve of Figures 1 and 2.

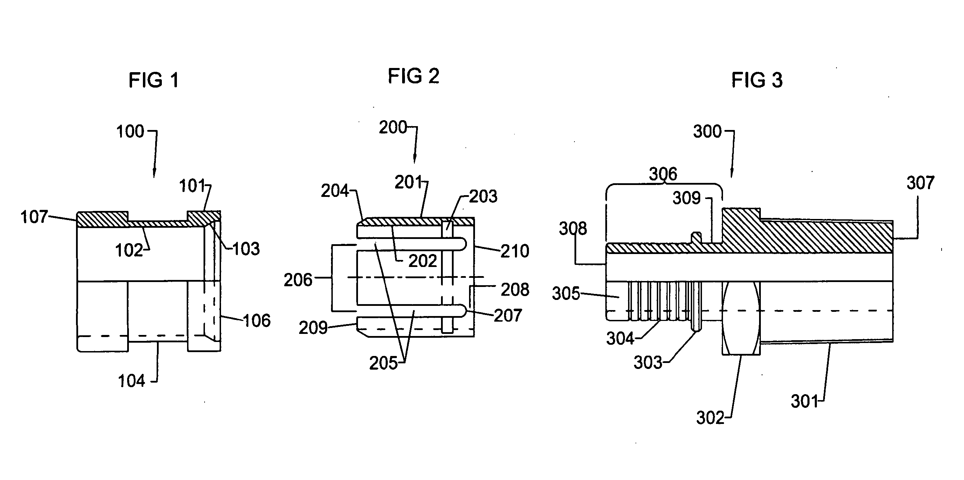

Referring to Figure 1, a collar 100 comprises a substantially cylindrical like configuration having an outer surface 101 and an inner surface 102. Towards a second end 106 of collar 100 a tapered region 103 is provided on inner surface 102 such that the thickness of the collar wall decreases in the region of the taper 103 from the first end 107 to second end 106. Accordingly, the radius of the inner surface at the second end 106 is greater than the radius of the inner surface at the first end 107.

An annular groove 104 is recessed into outer surface 101 and positioned substantially midway between first and second ends 107, 106.

Referring to Figure 2, an inner sleeve 200 comprises a substantial cylindrical configuration having an outer surface 201 and an inner surface 202. A leading edge 204 at a first end 209 comprises a taper extending between inner surface 202 and outer surface 201. Taper 204 corresponds in gradient to taper 103 provided at inner surface 102 of outer collar 100. The diameter of entrance 106 is equal to or slightly larger than the diameter of end 209 of inner sleeve 200 to allow insertion of sleeve 200 within collar 100 and engagement between tapered regions 103, 204.

A plurality of elongate slots 205 extend longitudinally through the sleeve wall from the first end 209 towards a second end 210. Each slot 205 comprises an open end 206 provided at first end 209 whilst a second end 207 terminates at a region along the length of sleeve 200. Accordingly, a region 208 of sleeve 200 is devoid of slots or holes and maintains an annular ring configuration.

An annular groove 203 is indented on inner surface 202 and is displaced in one half of sleeve 200 towards second end 210.

Referring to Figure 3, a connection body 300, alternatively termed a spigot, comprises a conical end region 301 having screw threads on its external surface. The larger diameter end of conical end portion 301 is bordered by a hexagonal first shoulder 302 of greater cross sectional width than cone 301. An elongate tail 306 extends from the first shoulder 302 having a diameter less than first shoulder 302 and cone 301. Tail 306 comprises a second shoulder 303 having a larger diameter than tail 306.

Connection body 300 comprises a first end 307 corresponding to the smaller diameter end of cone 301 and a second end 308 corresponding to an end region of elongate tail 306. A plurality of grooves 304 are formed on the outer surface of tail 306 and extend over a region between second shoulder 303 and second end 308. Connection body 300 comprises a through bore 305 defining an inner tubular surface extending between first and second ends 307, 308. The first and second shoulders 302, 303 are separated by annular region 309.

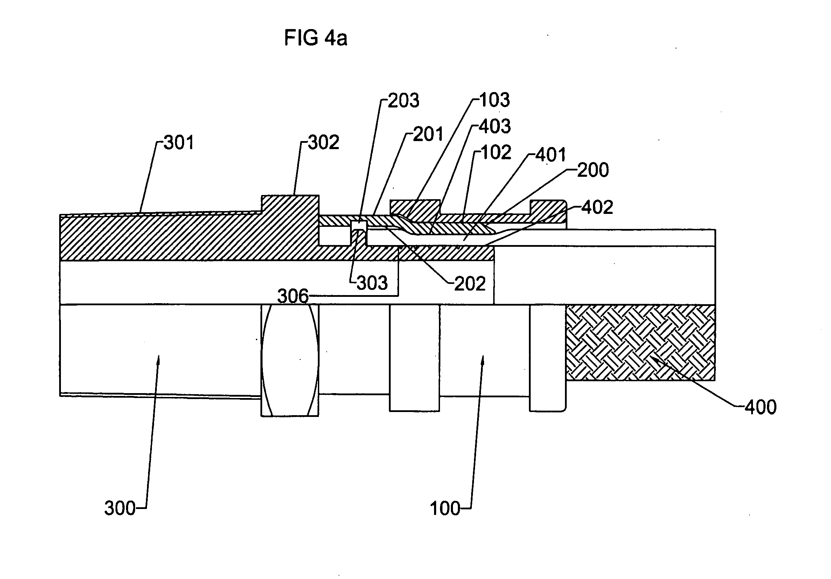

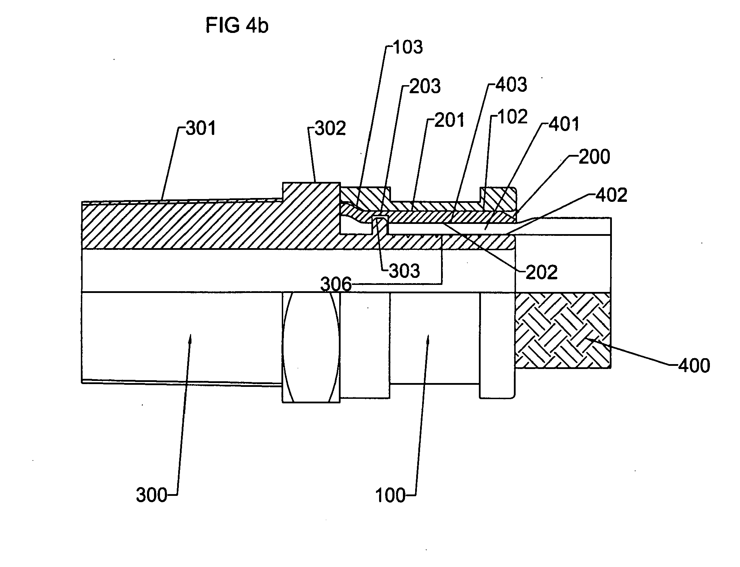

Figures 4a and 4b illustrate the end fitting partially and fully assembled at the hose end, respectively. To assemble the end fitting and releasably secure the connection body 300 to hose end 400, outer collar 100 and inner sleeve 200 are positioned over hose 400. Tail 306 of connection body 300 is inserted within the open end of hose 401 until the end face of hose 401 abuts shoulder 303. Accordingly an outer surface of tail 306 is positioned in contact with an inner surface 402 of hose end 401. Inner sleeve 200 is then moved into position over the outer surface 403 of hose end 401 so as to abut first shoulder 302. Outer collar 100 is then moved into position over inner sleeve 200, resulting in the radial compression of inner sleeve 200 onto the outer surface of the hose end 401. Sleeve 200 is located in position as second shoulder 303 is mated within annular groove 203 so as to inhibit longitudinal displacement of sleeve 200 relative to connection body 300. Inner surface 202 of sleeve 200 is thereby positioned in contact with outer surface 403 of hose end 401.

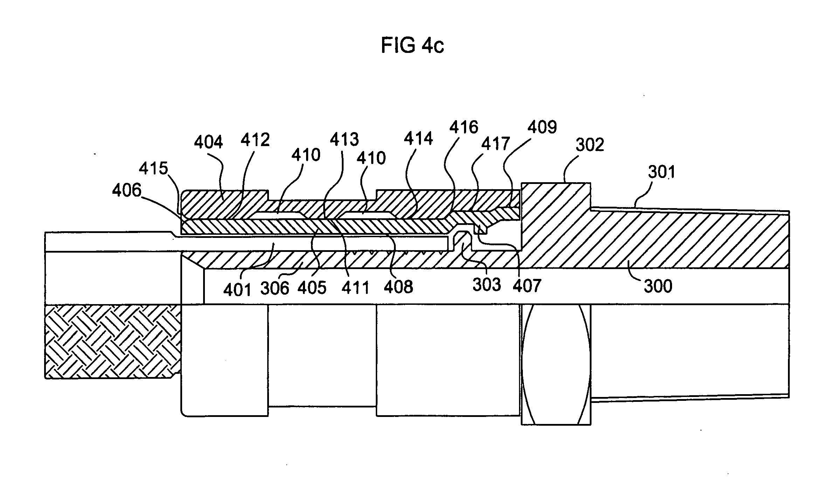

Figure 4c illustrates a further embodiment of the end fitting comprising outer collar 404 and inner sleeve 405. Sleeve 405 comprises the elongated slots 205 (not shown) and a lead-in taper 406 corresponding to taper 204 of Figure 2. In contrast to the radial groove 203 extending internally within sleeve 200 of the embodiment of Figure 2, sleeve 405 comprises a radial inwardly projecting shoulder 407 extending from inner surface 408 and towards one end 409 of sleeve 405.

Outer collar 404 corresponding to outer collar 100 of the embodiment of Figure 1 additionally comprises two annular grooves 410 extending from its inner surface 412, 413, 414. Grooves 410 are spaced apart in the longitudinal direction of collar 404 so as to define a first annular compression surface 412 extending from the tapered lead-in end 405; a second annular compression surface 413 extending between recessed grooves 410 and a third annular compression surface 414 is positioned between groove 410 and the second end of collar 404. The thickness of outer collar 404 decreases at a tapered region 416 bordering compression surface 414 to provide a larger diameter internal locking surface 417.

In operation, annular grooves 410 serve to relieve friction between inner surface 412, 413, 414 of collar 404 and outer surface 411 of sleeve 405 as collar 404 is slid over sleeve 405 positioned over and about compressible hose 401 and tail 306 of connection body 300.

As collar 404 is slid completely over the outer surface of sleeve 405, compression surface 417 compresses inner sleeve 405 at the region of internal shoulder 407 so as to radially compress shoulder 407 in to a locking position immediately behind shoulder 303 extending from tail 306 of connection body 300. Accordingly, compressible hose 401 is secured in position at connection body 300 by a combination of the expansion force resulting from compression of sleeve 405 and hose end 401 and the abutted shoulders 303, 407. The frictional contact between sleeve 405 and collar 404 is provided predominantly in the region of the locking surfaces 412, 413, 414 spaced apart in the longitudinal direction by annular grooves 410.

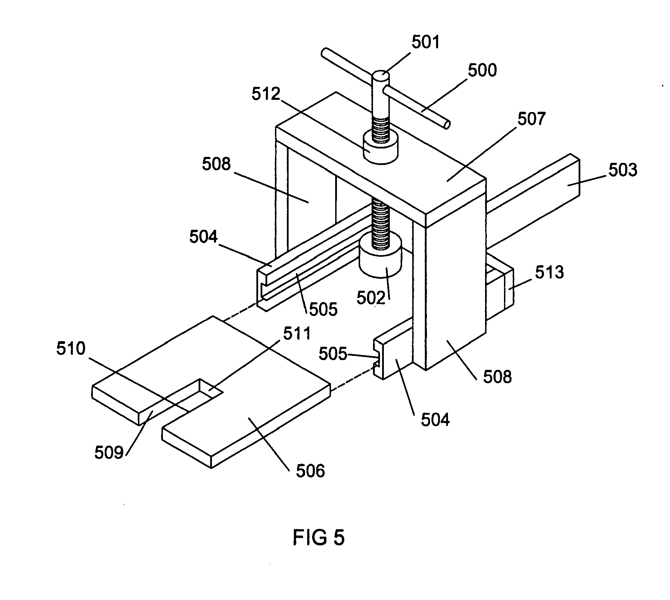

Figure 5 illustrates one example of a device for removably securing outer collar 100 in position over and about inner sleeve 200. The end fitting assembly device of Figure 5 comprises a handle 500 secured to a central spindle 501 comprising external screw threads. Spindle 501 extends through a hollow boss 512 comprising corresponding screw threads formed on its internal surface. Spindle 501 may be displaced back and forth relative to boss 512 by rotation of handle 500 involving cooperation between the opposed screw threads.

The boss 512 is mounted on a bridge 507. A pair of legs 508 extend from either end of bridge 507 and terminate at two opposing arms 504 of a Y-shaped member 513 aligned substantially perpendicular to legs 508. A single arm 503 forms a single spoke of the Y member and is used to allow the device to be clamped by a vice or similar apparatus.

Each of the opposed arms 504 comprise a groove 505 extending along its length. Each groove 505 is configured to receive the end region of an elongate plate 506 which may be removably slotted into position between opposing arms 504 via grooves 505. Plate 506 comprises a substantially rectangular cut-out section 511 positioned substantially midway along its length.

An engagement boss 502 is connected at one end of spindle 501 and is configured to mate and releasably engage with connection body 300. Engagement boss 502 is configured to swivel freely with respect to spindle 501 by way of a conventional configuration as will be appreciated by those skilled in the art such that axial compression may be applied to connection body 300 without connection body 300 being rotated. The gap between surfaces 509, 510 of cut out section 511 is slightly larger than the diameter of groove 104, but less than the diameter of outer surface 101 of outer collar 100 so as to prevent axial displacement of collar 100 during assembly.

To assemble the end fitting, outer collar 100 is inserted within cut-out 511 such that groove 104 is positioned loosely between opposing faces 509, 510 of plate 506 which is held in position within grooves 505. As outer collar 100 is held in substantially axially fixed position, connection body 300 and inner sleeve 200 are displaced axially by the clockwise rotation of handle 500 and spindle 501 so as to force outer collar 100 over the outer surface of inner sleeve 200. As the radius of the outer surface 201 of the inner sleeve 200 is greater than the radius of the inner surface 102 of the outer collar 100, radial compression of the inner sleeve 200 is provided as inner surface 102 of outer collar 100 is forced over outer surface 201 of inner sleeve 200. Second end 106 of outer collar 100 passes over outer surface 201 of inner sleeve 200 towards end 210 to abut shoulder 302 as illustrated in Figures 4a and 4b.

The tubular inner sleeve 200 is designed by the use of slots or like means in such a way that it can be collapsed to a smaller diameter with the application of a radially applied force that is much smaller than the force required to collapse a conventional unslotted tube, cold-forged by crimping or swaging. The end fitting may therefore be assembled using a hand operated tool of the type of Figure 5 to force the outer collar over the inner sleeve obviating the need for powered hydraulic apparatus.

Once assembled as illustrated in Figure 4b, outer collar 100 is axially locked in position over and about inner sleeve 200 by the friction resulting from the action of the elastic memory of the compressed inner sleeve 200 and hose end 401. Accordingly, the locking force is provided by a combination of the expansion force resulting from compression of inner sleeve 200 and hose end 401 on to connection body 300. The appreciable return force exhibited by inner sleeve 200 is due in part to the annular ring 208 extending between sleeve end 210 and end 207 of slots 205. The assembly is therefore held in a locked position by the frictional contact force between outer surface 201 of inner sleeve 200 and inner surface 102 of outer collar 100. The frictional contact between inner sleeve 200 and outer collar 100 extends substantially over the entire compressed length of inner sleeve 200.

Once assembled, the end fitting may be disassembled by a reversal of the assembly process involving forcing outer collar 100 from outer surface 201 of inner sleeve 200. The disconnection may be achieved using the hand tool of Figure 5 in which a suitable connection device (not shown) is used to connect boss 502 and connection body 300 whereby counterclockwise rotation of handle 500 forces separation of outer collar 100 from inner sleeve 200. After separation, collar 100 and connection body 300 may then be recovered and reused. Optionally, and depending upon the choice of material from which is it made, inner sleeve 200 may also be configured for reuse following initial assembly.

Unlike conventional reusable hose end fittings, the locking action is such that outer collar 100 may be removed only by the use of either extreme force or a specifically designed hand tool. This renders the attachment both secure and tamperproof. Conventional crimped and swaged non-reusable end fittings can be removed only by sawing or cutting through the securing collar which typically results in damage to the connection body which must then be discarded preventing reuse. The present end fitting may be disassembled without damage to the connection body allowing reuse.

To achieve the required degree of collapse of inner sleeve 200 without the use of excessive force, the width of slots 205 should be wide enough so that when inner sleeve 200 is fully collapsed to compress the hose 401 down to the required diameter, the opposite longitudinal edge faces of the slots should be pressed towards each other so that they either leave a gap, or are just touching, but are not compressed hard against each other.

This design of the inner sleeve 200 provides that it is capable of being collapsed to the required diameter without any cold forging, so that the wall thickness and length of sleeve 200 remain substantially the same. The high forces required for cold forging are therefore avoided.

## Claims

1. A hose fitting comprising:
an inner sleeve (200, 405) having an inner (202, 408) and outer (201, 411) surface, said inner surface (202, 408) configured for positioning over an outer surface (403) of a compressible hose (401) capable of receiving a connection body (300) internally within said hose (401), said inner sleeve (200, 405) capable of radial compression over a region of its length;
said inner sleeve (200, 405) comprising at least one slot (205) extending longitudinally over a region of said inner sleeve (200, 405) configured for compression, said slot (205) being open at one end (206) of said inner sleeve (200, 405); and
an outer collar (100, 404) having an inner surface (102, 412, 413, 414) configured for positioning over said outer surface (201, 411) of said inner sleeve (200, 405) wherein prior to contact with said inner sleeve (200, 405) a radius of a region of said inner surface (102, 412, 413, 414) of said outer collar (100, 404) is less than a radius of a region of said outer surface (201, 411) of said inner sleeve (200, 405), wherein said outer collar (100, 404) is configured to radially compress at least a region of said inner sleeve (200, 405) and said hose (401) against said connection body (300) such that in the region of compression said inner surface (102, 412, 413, 414) of said outer collar (100, 404) and said inner (202, 408) and outer (201, 411) surfaces of said inner sleeve (200, 405) are aligned substantially parallel with the longitudinal axis of said inner sleeve (200, 405) and said outer collar (100, 404);
wherein said outer collar (100, 404) may be held in position over said inner sleeve (200, 405) exclusively by the longitudinally extending frictional contact between said inner surface (102, 412, 413, 414) of said outer collar (100, 404) and said outer surface (201, 411) of said inner sleeve (200, 405) in response to the radial expansion force of said compressed hose (401) and said inner sleeve (200, 405) positioned between said outer collar (100, 404) and said connection body (300);
said hose fitting **characterised by**:
a groove (203) provided at said inner surface (202, 408) of a said inner sleeve (200, 405) configured to mate with a shoulder (303) extending from said connection body (300), the cooperative engagement of said groove (203)and said shoulder (303) configured to inhibit axial displacement of said inner sleeve (200, 405) relative to said connection body (300);
said outer collar (100, 404) configured to maintain said cooperative engagement between said groove (203, 407) and said shoulder (303) by positioning over said inner sleeve (200, 405).

2. The hose fitting as claimed in claim 1 wherein:
a leading edge (209) of said inner sleeve (200, 405) comprises a taper (204, 406) extending between said inner surface (202, 408) and said outer surface (201, 411); and
a region of said inner surface (102, 412) of said outer collar (100, 404) comprises a taper (103, 415) configured to receive the tapered leading edge (204, 406) of said inner sleeve (200, 405).

3. The hose fitting as claimed in claims 1 or 2 wherein said inner sleeve (200, 405) also comprises a shoulder (407) extending from its inner surface (202, 408), said shoulder (407) also configured to mate with the shoulder (303) extending from the connection body (300), the cooperation between the shoulders (303, 407) configured to further inhibit axial displacement of said inner sleeve (200, 405) relative to said connection body (300).

4. The hose fitting as claimed in any preceding claim wherein said outer collar (100, 404), comprises at least one groove (410) indented on its inner surface (102, 412).

5. The hose fitting as claimed in any preceding claim wherein said outer collar (100, 404) comprises an annular groove (104) recessed into said outer surface (101).

6. The hose fitting as claimed in any preceding claim wherein said inner sleeve (200, 405) comprises a deformable material.

7. The hose fitting as claimed in any preceding claim wherein said inner sleeve (200, 405) is configured to transfer the return expansion force from said compressed hose (401) to said outer collar (100, 404).

8. The hose fitting as claimed in any preceding claim wherein said at least one slot (205) extends over a radially compressible region of said inner sleeve (200, 405).

9. The hose fitting as claimed in any preceding claim, wherein said outer surface (201, 411) of said inner sleeve (200, 405) comprises grooves or scoring configured to provide a non-smooth surface.

10. The hose fitting as claimed in any preceding claim, wherein said inner surface (102, 412, 413, 414) of said outer collar (100, 404) comprising grooves or scoring to provide a non-smooth surface.

11. A method of releasably securing a connection body (300) to a hose (401), said method comprising:
inserting a connection body (300) within an end region of a compressible hose (401);
positioning an inner sleeve (200, 405) over said hose (401) at the region of said connection body (300), said inner sleeve (200, 405) comprising at least one slot (205) open at one end (206);
sliding an outer collar (100, 404) over an outer surface (201, 411) of said inner sleeve (200, 405) wherein prior to contact with said inner sleeve (200, 405) a radius of a region of an inner surface (102, 412, 413, 414) of said outer collar (100, 404) is less than a radius of a region of said outer surface (201, 411) of said inner sleeve (200, 405); and
radially compressing said inner sleeve (200, 405) and said hose (401) on to said connection body (300) as said outer collar (100, 404) is slid over said inner sleeve (200, 405), a width of said at least one slot (205) configured to decrease as said inner sleeve (200, 405) is radially compressed, wherein said outer collar (100, 404) is held in position over said inner sleeve (200, 405) exclusively by the longitudinally extending frictional contact between said inner surface (102, 412, 413, 414) of said outer collar (100, 404) and said outer surface (201, 411) of said inner sleeve (200, 405) in response to the radial expansion of the compressed hose (401) and said inner sleeve (200, 405) positioned between said outer collar (100, 404) and said connection body (300) such that in the region of compression said inner surface (102, 412, 413, 414) of said outer collar (100, 404) and said inner (202, 408) and outer (201, 411) surfaces of said inner sleeve (200, 405) are aligned substantially parallel with the longitudinal axis of said inner sleeve (200, 405) and said outer collar (100, 404);
said method **characterised by**:
inhibiting axial displacement of said inner sleeve (200, 405) relative to said connection body (300) by mating a shoulder (303) projecting from said connection body (300) into a groove (203) provided on an inner surface (202, 408) of said inner sleeve (200, 405) ; and
maintaining said cooperative engagement between by said groove (203, 407) and said shoulder (303) via said outer collar (100, 404).

12. The method as claimed in claims 11 wherein said outer collar (100, 404) is forced over said outer surface (201, 411) of said inner sleeve (200, 405) by clamping said outer collar (100, 404) in a substantially fixed position to inhibit its longitudinal displacement and displacing said connection body (300) and said inner sleeve (200, 405) relative to said outer collar (100, 404).

13. The method as claimed in claims 11 or 12 further comprising:
prior to said step of sliding said outer collar (100, 404) over said inner sleeve (200, 405), positioning said groove (203) over said shoulder (303) so as to inhibit longitudinal displacement of said inner sleeve (200, 405) relative to said connection body (300) after said outer collar (100, 404) is slid over said inner sleeve (200, 405).

14. The method as claimed in claims 11 or 12 further comprising:
prior to said step of sliding said outer collar (100, 404) over said inner sleeve (200, 405), positioning a shoulder (407) provided on an internal surface (202, 408) of said inner sleeve (200, 405) adjacent the shoulder (303) extending from the connection body (300) such that when said inner sleeve (200, 405) is compressed radially the shoulders (303, 407) abut one another so as to further inhibit axial displacement of said inner sleeve (200, 405) relative to said connection body (300) after said outer collar (100, 405) is slid over said inner sleeve (200, 405).

## Patentansprüche

1. Schlauchanschlussstück, umfassend:
eine Innenmuffe (200, 405) mit einer inneren (202, 408) und äußeren (201, 411) Oberfläche, wobei die innere Oberfläche (202, 408) zum Positionieren über einer äußeren Oberfläche (403) eines stauchbaren Schlauchs (401), welcher einen Verbindungskörper (300) innerhalb des Schlauchs (401) intern aufnehmen kann, konfiguriert ist, wobei die Innenmuffe (200, 405) sich radial über einen Abschnitt ihrer Länge stauchen lässt;
wobei die Innenmuffe (200, 405) mindestens einen Schlitz (205) umfasst, welcher sich longitudinal über einen Abschnitt der zur Stauchung konfigurierten Innenmuffe (200, 405) erstreckt, wobei der Schlitz (205) an einem Ende (206) der Innenmuffe (200, 405) offen ist; und
eine äußere Manschette (100, 404) mit einer inneren Oberfläche (102, 412, 413, 414), welche zur Positionierung über der äußeren Oberfläche (201, 411) der Innenmuffe (200, 405) konfiguriert ist, wobei vor Kontakt mit der Innenmuffe (200, 405) ein Radius eines Abschnitts der inneren Oberfläche (102, 412, 413, 414) der äußeren Manschette (100, 404) kleiner als ein Radius eines Abschnitts der äußeren Oberfläche (201, 411) der Innenmuffe (200, 405) ist,
wobei die äußere Manschette (100, 404) konfiguriert ist, zumindest einen Abschnitt der Innenmuffe (200, 405) und den Schlauch (401) derart radial gegen den Verbindungskörper (300) zu stauchen, dass in dem Abschnitt der Stauchung die innere Oberfläche (102, 412, 413, 414) der äußeren Manschette (100, 404) und die innere (202, 408) und äußere (201, 411) Oberfläche der Innenmuffe (200, 405) im Wesentlichen parallel mit der longitudinalen Achse der Innenmuffe (200, 405) und der äußeren Manschette (100, 404) ausgerichtet sind;
wobei die äußere Manschette (100, 404) allein durch den sich longitudinal erstreckenden Reibekontakt zwischen der inneren Oberfläche (102, 412, 413, 414) der äußeren Manschette (100, 404) und der äußeren Oberfläche (201, 411) der Innenmuffe (200, 405) in Position über der Innenmuffe (200, 405) gehalten werden kann in Folge der radialen Expansionskraft des gestauchten Schlauchs (401) und der Innenmuffe (200, 405), welche zwischen der äußeren Manschette (100, 404) und dem Verbindungskörper (300) positioniert sind;
wobei das Schlauchanschlussstück dadurch charakterisiert ist:
eine Nut (203), welche an der inneren Oberfläche (202, 408) der Innenmuffe (200, 405) bereitgestellt ist, welche konfiguriert ist, mit einer sich von dem Verbindungskörper (300) erstreckenden Leiste (303) ineinander zu greifen, wobei der gegenseitige Eingriff der Nut (203) und der Leiste (303) konfiguriert ist, axiales Verschieben der Innenmuffe (200, 405) in Bezug auf den Verbindungskörper (300) zu hemmen;
wobei die äußere Manschette (100, 404) konfiguriert ist, den gegenseitigen Eingriff zwischen der Nut (203, 407) und der Leiste (303) dadurch aufrecht zu erhalten, dass sie über der Innenmuffe (200, 405) positioniert ist.

2. Schlauchanschlussstück nach Anspruch 1, wobei:
eine Führungskante (209) der Innenmuffe (200, 405) eine Verjüngung (204, 406) umfasst, welche sich zwischen der inneren Oberfläche (202, 408) und der äußeren Oberfläche (201, 411) erstreckt; und
wobei ein Abschnitt der inneren Oberfläche (102, 412) der äußeren Manschette (100, 404) eine Verjüngung (103, 415) umfasst, welche konfiguriert ist, die sich verjüngende Führungskante (204, 406) der Innenmuffe (200, 405) aufzunehmen.

3. Schlauchanschlussstück nach Anspruch 1 oder 2, wobei die Innenmuffe (200, 405) auch eine sich von ihrer inneren Oberfläche (202, 408) erstreckende Leiste (407) umfasst, wobei die Leiste (407) auch konfiguriert ist, mit der sich von dem Verbindungskörper (300) erstreckenden Leiste (303) ineinander zu greifen, wobei das Zusammenwirken zwischen den Leisten (303, 407) konfiguriert ist, axiales Verschieben der Innenmuffe (200, 405) in Bezug auf den Verbindungskörper (300) weiter zu hemmen.

4. Schlauchanschlussstück nach einem der voranstehenden Ansprüche, wobei die äußere Manschette (100, 404) mindestens eine an ihrer inneren Oberfläche (102, 412) eingekerbte Nut (410) umfasst.

5. Schlauchanschlussstück nach einem der voranstehenden Ansprüche, wobei die äußere Manschette (100, 404) eine ringförmige Nut (104) umfasst, die innerhalb der äußeren Oberfläche (101) ausgespart ist.

6. Schlauchanschlussstück nach einem der voranstehenden Ansprüche, wobei die Innenmuffe (200, 405) ein deformierbares Material umfasst.

7. Schlauchanschlussstück nach einem der voranstehenden Ansprüche, wobei die Innenmuffe (200, 405) konfiguriert ist, die Gegenexpansionskraft von dem gestauchten Schlauch (401) zu der äußeren Manschette (100, 404) zu übertragen.

8. Schlauchanschlussstück nach einem der voranstehenden Ansprüche, wobei sich der mindestens eine Schlitz (205) über einen radial stauchbaren Abschnitt der Innenmuffe (200, 405) erstreckt.

9. Schlauchanschlussstück nach einem der voranstehenden Ansprüche, wobei die äußere Oberfläche (201, 411) der Innenmuffe (200, 405) Nuten oder Ritzen umfasst, welche konfiguriert sind, eine nichtglatte Oberfläche bereitzustellen.

10. Schlauchanschlussstück nach einem der voranstehenden Ansprüche, wobei die innere Oberfläche (102, 412, 413, 414) der äußeren Manschette (100, 404) Nuten oder Ritzen umfasst, um eine nichtglatte Oberfläche bereitzustellen.

11. Verfahren zum lösbaren Befestigen eines Verbindungskörpers (300) an einem Schlauch (401), wobei das Verfahren umfasst:
Einführen eines Verbindungskörpers (300) innerhalb eines Endabschnitts eines stauchbaren Schlauchs (401);
Positionieren einer Innenmuffe (200, 405) über dem Schlauch (401) an dem Abschnitt des Verbindungskörpers (300), wobei die Innenmuffe (200, 405) mindestens einen an einem Ende (206) offenen Schlitz (205) umfasst;
Schieben einer äußeren Manschette (100, 404) über eine äußere Oberfläche (201, 411) der Innenmuffe (200, 405), wobei vor dem Kontakt mit der Innenmuffe (200, 405) ein Radius eines Abschnitts einer inneren Oberfläche (102, 412, 413, 414) der äußeren Manschette (100, 404) kleiner als ein Radius eines Abschnitts der äußeren Oberfläche (201, 411) der Innenmuffe (200, 405) ist; und
radiales Stauchen der Innenmuffe (200, 405) und des Schlauchs (401) auf den Verbindungskörper (300), während die äußere Manschette (100, 404) über die Innenmuffe (200, 405) geschoben wird, wobei eine Breite des mindestens einen Schlitzes (205) konfiguriert ist, während die Innenmuffe (200, 405) radial gestaucht wird, abzunehmen, wobei die äußere Manschette (100, 404) allein durch den sich longitudinal erstreckenden Reibungskontakt zwischen der inneren Oberfläche (102, 412, 413, 414) der äußeren Manschette (100, 404) und der äußeren Oberfläche (201, 411) der Innenmuffe (200, 405) in Position über der Innenmuffe (200, 405) gehalten wird in Folge der radialen Expansion des gestauchten Schlauchs (401) und der Innenmuffe (200, 405), welche zwischen der äußeren Manschette (100, 404) und dem Verbindungskörper (300) positioniert sind, so dass in dem Abschnitt der Stauchung die innere Oberfläche (102, 412, 413, 414) der äußeren Manschette (100, 404) und die innere (202, 408) und äußere (201, 411) Oberfläche der Innenmuffe (200, 405) im Wesentlichen parallel mit der longitudinalen Achse der Innenmuffe (200, 405) und der äußeren Manschette (100, 404) ausgerichtet sind;
wobei das Verfahren dadurch charakterisiert ist:
Hemmen der axialen Verschiebung der Innenmuffe (200, 405) in Bezug auf den Verbindungskörper (300) durch Ineinandergreifen einer Leiste (303), welche von dem Verbindungskörper (300) herausragt, mit einer Nut (203), welche an einer inneren Oberfläche (202, 408) der Innenmuffe (200, 405) bereitgestellt ist; und
Aufrechterhalten des gegenseitigen Eingriffs zwischen der Nut (203, 407) und der Leiste (303) mittels der äußeren Manschette (100, 404).

12. Verfahren nach Anspruch 11, wobei die äußere Manschette (100, 404) über die äußere Oberfläche (201, 411) der Innenmuffe (200, 405) durch Arretieren der äußeren Manschette (100, 404) in einer im Wesentlichen festen Position gezwungen wird, um ihre longitudinale Verschiebung und das Verschieben des Verbindungskörpers (300) und der Innenmuffe (200, 405) in Bezug auf die äußere Manschette (100, 404) zu hemmen.

13. Verfahren nach Anspruch 11 oder 12, weiterhin umfassend:
vor dem Schritt des Schiebens der äußeren Manschette (100, 404) über die Innenmuffe (200, 405), Positionieren der Nut (203) über der Leiste (303), so dass, nachdem die äußere Manschette (100, 404) über die Innenmuffe (200, 405) geschoben wurde, das longitudinale Verschieben der Innenmuffe (200, 405) in Bezug auf den Verbindungskörper (300) gehemmt wird.

14. Verfahren nach Anspruch 11 oder 12, weiterhin umfassend:
vor dem Schritt des Schiebens der äußeren Manschette (100, 404) über die Innenmuffe (200, 405), Positionieren einer Leiste (407), welche an einer inneren Oberfläche (202, 408) der Innenmuffe (200, 405) angrenzend an die sich von dem Verbindungskörper (300) erstreckende Leiste (303) bereitgestellt ist, so dass, wenn die Innenmuffe (200, 405) radial gestaucht wird, die Leisten (303, 407) gegeneinander stoßen, so dass sie, nachdem die äußere Manschette (100, 405) über die Innenmuffe (200, 405) geschoben ist, axiales Verschieben der Innenmuffe (200, 405) in Bezug auf den Verbindungskörper (300) weiter hemmen.

## Revendications

1. Raccord de tuyau souple comprenant :
un manchon intérieur (200, 405) présentant une surface intérieure (202, 408) et une surface extérieure (201, 411), ladite surface intérieure (202, 408) étant configurée pour être positionnée sur une surface extérieure (403) d'un tuyau compressible (401) capable de recevoir un corps de liaison (300) en interne dans ledit tuyau (401), ledit manchon intérieur (200, 405) étant capable de compression radiale sur une région de sa longueur ;
ledit manchon intérieur (200, 405) comprenant au moins une fente (205) s'étendant longitudinalement sur une région dudit manchon intérieur (200, 405) configurée pour la compression, ladite fente (205) étant ouverte sur une extrémité (206) dudit manchon intérieur (200, 405) ;
un collier extérieur (100, 404) présentant une surface intérieure (102, 412, 413, 414) configurée pour être positionnée sur ladite surface extérieure (201, 411) dudit manchon intérieur (200, 405), dans lequel avant le contact avec ledit manchon intérieur (200, 405), un rayon d'une région de ladite surface intérieure (102, 412, 413, 414) dudit collier extérieur (100, 404) est inférieur à un rayon d'une région de ladite surface extérieure (201, 411) dudit manchon intérieur (200, 405), dans lequel ledit collier extérieur (100, 404) est configuré pour compresser radialement au moins une région dudit manchon intérieur (200, 405) et ledit tuyau (401) contre ledit corps de liaison (300) de sorte que dans la région de la compression, ladite surface intérieure (102, 412, 413, 414) dudit collier extérieur (100, 404) et lesdites surfaces intérieures (202, 408) et extérieures (201, 411) dudit manchon intérieur (200, 405) soient alignées sensiblement parallèlement à l'axe longitudinal dudit manchon intérieur (200, 405) et dudit collier extérieur (100, 404) ;
dans lequel ledit collier extérieur (100, 404) peut être maintenu exclusivement en position sur ledit manchon intérieur (200, 405) par le contact de friction s'étendant longitudinalement entre ladite surface intérieure (102, 412, 413, 414) dudit collier extérieur (100, 404) et ladite surface extérieure (201, 411) dudit manchon intérieur (200, 405) en réponse à la force d'expansion radiale dudit tuyau compressé (401) et dudit manchon intérieur (200, 405) positionné entre ledit collier extérieur (100, 404) et ledit corps de liaison (300) ;
ledit raccord de tuyau souple étant **caractérisé par** :
une rainure (203) prévue sur ladite surface intérieure (202, 408) d'un manchon intérieur (200, 405) configurée pour s'accoupler à un épaulement (303) s'étendant depuis ledit corps de liaison (300), l'engagement coopératif de ladite rainure (203) et dudit épaulement (303) étant configuré pour empêcher le déplacement axial dudit manchon intérieur (200, 405) par rapport audit corps de liaison (300) ;
ledit collier extérieur (100, 404) étant configuré pour maintenir ledit engagement coopératif entre ladite rainure (203, 407) et ledit épaulement (303) par le positionnement sur ledit manchon intérieur (200, 405).

2. Raccord de tuyau souple selon la revendication 1, dans lequel :
une arête avant (209) dudit manchon intérieur (200, 405) comprend une dépouille (204, 406) s'étendant entre ladite surface intérieure (202, 408) et ladite surface extérieure (201, 411) ; et une région de ladite surface intérieure (102, 412) dudit collier extérieur (100, 404) comprend une dépouille (103, 415) configurée pour recevoir l'arête avant effilée (204, 406) dudit manchon intérieur (200, 405).

3. Raccord de tuyau souple selon la revendication 1 ou 2, dans lequel ledit manchon intérieur (200, 405) comprend aussi un épaulement (407) s'étendant depuis sa surface intérieure (202, 405), ledit épaulement (407) étant aussi configuré pour s'accoupler à l'épaulement (303) s'étendant depuis le corps de liaison (300), la coopération entre les épaulements (303, 407) étant configurée pour empêcher en outre le déplacement axial dudit manchon intérieur (200, 405) par rapport audit corps de liaison (300).

4. Raccord de tuyau souple selon l'une quelconque des revendications précédentes, dans lequel ledit collier extérieur (100, 404) comprend au moins une rainure (410) dentelée sur sa surface intérieure (102, 412).

5. Raccord de tuyau souple selon l'une quelconque des revendications précédentes, dans lequel ledit collier extérieur (100, 404) comprend une rainure annulaire (104) évidée dans ladite surface extérieure (101).

6. Raccord de tuyau souple selon l'une quelconque des revendications précédentes, dans lequel ledit manchon intérieur (200, 405) comprend un matériau déformable.

7. Raccord de tuyau souple selon l'une quelconque des revendications précédentes, dans lequel ledit manchon intérieur (200, 405) est configuré pour transférer la force d'expansion de retour dudit tuyau compressé (401) audit collier extérieur (100, 404).

8. Raccord de tuyau souple selon l'une quelconque des revendications précédentes, dans lequel au moins une fente (205) s'étend sur une région radialement compressible dudit manchon intérieur (200, 405).

9. Raccord de tuyau souple selon l'une quelconque des revendications précédentes, dans lequel ladite surface extérieure (201, 411) dudit manchon intérieur (200, 405) comprend des rainures ou une encoche configurée pour fournir une surface non lisse.

10. Raccord de tuyau souple selon l'une quelconque des revendications précédentes, dans lequel ladite surface intérieure (102, 412, 413, 414) dudit collier extérieur (100, 404) comprend des rainures ou une encoche pour fournir une surface non lisse.

11. Procédé de fixation détachable d'un corps de liaison (300) à un tuyau (401), ledit procédé comprenant :
l'insertion d'un corps de liaison (300) dans une région terminale d'un tuyau compressible (401) ;
le positionnement d'un manchon intérieur (200, 405) sur ledit tuyau (401) sur la région dudit corps de liaison (300), ledit manchon intérieur (200, 405) comprenant au moins une fente (205) ouverte sur une extrémité (206) ;
le glissement d'un collier extérieur (100, 404) sur une surface extérieure (201, 411) dudit manchon intérieur (200, 405), dans lequel avant le contact avec ledit manchon intérieur (200, 405), un rayon d'une région d'une surface intérieure (102, 412, 413, 414) dudit collier extérieur (100, 404) est inférieur à un rayon d'une région de ladite surface extérieure (201, 411) dudit manchon intérieur (200, 405) ; et
la compression radiale dudit manchon intérieur (200, 405) et dudit tuyau (401) sur ledit corps de liaison (300) lors du glissement dudit collier extérieur (100, 404) sur ledit manchon intérieur (200, 405), une largeur d'au moins une fente (205) étant configurée pour se réduire lors de la compression radiale dudit manchon intérieur (200, 405), dans lequel ledit collier extérieur (100, 404) est maintenu exclusivement en position sur ledit manchon intérieur (200, 405) par le contact de friction s'étendant longitudinalement entre ladite surface intérieure (102, 412, 413, 414) dudit collier extérieur (100, 404) et ladite surface extérieure (201, 411) dudit manchon intérieur (200, 405) en réponse à l'expansion radiale du tuyau compressé (401) et ledit manchon intérieur (200, 405) étant positionné entre ledit collier extérieur (100, 404) et ledit corps de liaison (300) de sorte que dans la région de compression, ladite surface intérieure (102, 412, 413, 414) dudit collier extérieur (100, 404) et lesdites surfaces intérieures (202, 408) et extérieures (201, 411) dudit manchon intérieur (200, 405) soient alignées sensiblement parallèlement à l'axe longitudinal dudit manchon intérieur (200, 405) et dudit collier extérieur (100, 404) ;
ledit procédé étant **caractérisé par** :
l'empêchement du déplacement axial dudit manchon intérieur (200, 405) par rapport audit corps de liaison (300) par l'accouplement à un épaulement (303) saillant dudit corps de liaison (300) dans une rainure (203) prévue sur une surface intérieure (202, 408) dudit manchon intérieur (200, 405) ; et
le maintien dudit engagement coopératif entre ladite rainure (203, 407) et ledit épaulement (303) via ledit collier extérieur (100, 404).

12. Procédé selon la revendication 11, dans lequel ledit collier extérieur (100, 404) est poussé sur ladite surface extérieure (201, 411) dudit manchon intérieur (200, 405) en serrant ledit collier extérieur (100, 404) dans une position sensiblement fixée pour empêcher son déplacement longitudinal et en déplaçant ledit corps de liaison (300) et ledit manchon intérieur (200, 405) par rapport audit collier extérieur (100, 404).

13. Procédé selon la revendication 11 ou 12 comprenant en outre :
avant ladite étape de glissement dudit collier extérieur (100, 404) sur ledit manchon intérieur (200, 405), le positionnement de ladite rainure (203) sur ledit épaulement (303) de sorte à empêcher le déplacement longitudinal dudit manchon intérieur (200, 405) par rapport audit corps de liaison (300), après le glissement dudit collier extérieur (100, 404) sur ledit manchon intérieur (200, 405).

14. Procédé selon la revendication 11 ou 12 comprenant en outre :
avant ladite étape de glissement dudit collier extérieur (100, 404) sur ledit manchon intérieur (200, 405), le positionnement d'un épaulement (407) prévu sur une surface interne (202, 408) dudit manchon intérieur (200, 405) adjacent à l'épaulement (303) s'étendant depuis le corps de liaison (300) de sorte que lorsque ledit manchon intérieur (200, 405) est compressé radialement, les épaulements (303, 407) buttent l'un contre l'autre de sorte à empêcher en outre le déplacement axial dudit manchon intérieur (200, 405) par rapport audit corps de liaison (300), après le glissement dudit collier extérieur (100, 404) sur ledit manchon intérieur (200, 405).
